# EUROPÄISCHE PATENTSCHRIFT

(11) **EP 2 125 272 B1**
(45) Veröffentlichungstag und Bekanntmachung des Hinweises auf die Patenterteilung: **29.06.2011**
(21) Anmeldenummer: 08709058.5
(22) Anmeldetag: 18.02.2008
(51) Int. Cl.: B23B 27/00, B32B 27/30, B32B 7/12, B65D 53/06, B65D 75/30, B65D 77/20, C09J 133/06

(54) **SIEGELBARES LAMINAT FÜR WIEDERVERSCHLIEßBARE VERPACKUNGEN**
SEALABLE LAMINATE FOR RESEALABLE PACKAGING
STRATIFIÉ SOUDABLE CONÇU POUR DES EMBALLAGES REFERMABLES

(30) Priorität: 20.02.2007 EP 07102720
(43) Veröffentlichungstag der Anmeldung: 02.12.2009
(73) Patentinhaber: BASF SE, 67056 Ludwigshafen (DE)
(72) Erfinder: ARISANDY, Christofer, 68163 Mannheim (DE); BEYERS, Cornelis, Petrus, 67122 Altrip (DE); PIETSCH, Ines, 67346 Speyer (DE); KIRSCH, Stefan, 55268 Nieder-Olm (DE); DRAGON, Andree, 67346 Speyer (DE)
(86) Internationale Anmeldenummer: PCT/EP2008/051916
(87) Internationale Veröffentlichungsnummer: WO 2008/101887

(56) Entgegenhaltungen:
- EP-A- 0 412 503
- WO-A-97/22642
- DE-A1-102004 031 203
- DE-A1-102005 035 979
- FR-A- 2 816 952

## Beschreibung

Die Erfindung betrifft ein mehrschichtiges Laminat aus mindestens
a) einem Träger
b) einer Haftklebstoffschicht und
c) einer siegelbaren Schicht,
wobei sich die Haftklebstoffschicht zwischen dem Träger und der siegelbaren Schicht befindet, dadurch gekennzeichnet, dass der Haftklebstoff ein polymeres Bindemittel enthält, welches eine Glasübergangstemperatur von -60 bis -0 °C und einen Gelgehalt kleiner 50 Gew.-% hat (im nachfolgenden kurz Klebstoff-Polymer genannt).

Weiterhin betrifft die Erfindung die Verwendung dieses Laminats als Bestandteil von wiederverschließbaren Verpackungen, z. B. als Deckelfolie oder Behälter.

Wiederverschließbare Verpackungen sind lange bekannt. Bei derartige Verpackungen wird im allgemeinen ein Behälter (tray), der das zu verpackende Gut enthält, mit einer Deckelfolie dauerhaft versiegelt. Die Siegelschichten des Behälters und der Deckelfolie sind blockfest, d.h. nicht klebrig. Sie werden bei ausreichend hohen Temperaturen dauerhaft miteinander verbunden (Siegelung). Beim Öffnen der Verpackung wird eine permanent klebrige Klebstoffschicht freigelegt. Die permanent klebrige Klebstoffschicht gewährleistet ein wiederholbares Öffnen und Schließen der Verpackung. In WO 90/07427, EP-A 1460117, BE 1010387 und DE-A 102005035979 werden wiederverschließbare Verpackungen beschrieben, die einen Haftklebstoff enthalten.

Für Lebensmittel sind geruchsfreie wiederverschließbare Verpackungen gewünscht. Polymere, welche Vinylacetat enthalten, sollen daher möglichst vermieden werden. Auch soll für die Verpackung von Lebensmitteln möglichst auf chlor-haltige Polymerisate als Bestandteil der Verpackungen, z. B. als Migrationssperre, verzichtet werden.

Die anwendungstechnischen Eigenschaften der Verpackungen sollen möglichst gut sein, insbesondere sollen sie möglichst geöffnet und wieder fest verschlossen werden können.
Auch nach wiederholtem Öffnen und Schließen der Verpackung soll die Klebrigkeit der Haftklebstoffschicht möglichst stark bleiben.

Aufgabe der Erfindung waren daher geruchsfreie wiederverschließbare Verpackungen, insbesondere auch für Lebensmittel mit guten Dauergebrauchseigenschaften, insbesondere einer auch nach mehrmaligem Öffnen noch guten Verschließbarkeit.

Demgemäß wurde das oben definierte Laminat gefunden.

Das Laminat besteht aus
a) einem Träger
b) einer Haftklebstoffschicht und
c) einer siegelbaren Schicht,
wobei sich die Haftklebstoffschicht zwischen dem Träger und der siegelbaren Schicht befindet,

### Zum Träger

Bei dem Träger handelt es sich zum Beispiel um eine Polymerfolie, Metallfolie, z. B. eine Aluminiumfolie, oder metallisierte Polymerfolien.
Beim Träger kann es sich insbesondere auch um einen Verbund aus unterschiedlichen Materialien handeln, z. B. aus Papier und Polymerfolie, z. B. Polyethylen. Insbesondere kommen Polymerfolien, vorzugsweise transparente Polymerfolien oder deren Verbunde mit anderen Materialien in Betracht. Genannt seien z. B. Polyolefin- , Polyester- oder Polyacetatfolien.

Als Polyolefinfolien kommen z. B. solche aus Polyethylen, Polypropylen, insbesondere orientiertem Polypropylen in Betracht.

Bevorzugt sind Polyesterfolien, z. B. solche aus Phthalsäure- oder Therephthalsäureestern, besonders bevorzugt sind Folien aus Polyethylentherephthalat (PET).

Der Träger kann z. B. auch bedruckt sein.

Die Dicke des Trägers beträgt bevorzugt 1 bis 500 µm, besonders bevorzugt 5 bis 200 µm, besonders bevorzugt 20 bis 100 µm.

### Zur Haftklebstoffschicht

Auf den Träger ist eine Haftklebstoffschicht aufgebracht. Zwischen Träger und Haftklebstoffschicht können sich weitere Schichten, z. B. Migrationssperren für Gase oder Wasser, oder Haftvermittler befinden. In einer bevorzugten Ausführungsform werden derartige weitere Schichten nicht benötigt und die Haftklebstoffschicht befindet sich unmittelbar auf dem Träger.

Der Haftklebstoff, der die Haftklebstoffschicht ausbildet, enthält vorzugsweise kein Vinylacetat, weder in freier noch in einpolymerisierter Form.

Der Haftklebstoff enthält ein polymeres Bindemittel, welches eine Glasübergangstemperatur von -60 bis 0 °C und einen Gelgehalt kleiner 50 Gew.-% hat (im nachfolgenden kurz Klebstoff-Polymer genannt).

Vorzugsweise enthält das Klebstoff-Polymer kein Vinylacetat, weder in freier noch in einpolymerisierter Form.

Die Glasübergangstemperatur des Klebstoff-Polymeren beträgt vorzugsweise -60 bis - 20 °C, besonders bevorzugt -60 bis -30 °C und ganz besonders bevorzugt -60 bis -35 °C und in einer besonderen Ausführungsform -50 bis -40 °C.

Die Glasübergangstemperatur lässt sich nach üblichen Methoden wie Differentialthermoanalyse oder Differential Scanning Calorimetrie (s. z. B. ASTM 3418/82, sog. "midpoint temperature") bestimmen.

Der Gelgehalt des Klebstoff-Polymeren ist vorzugsweise kleiner 40 Gew.-%, insbesondere kleiner 35 Gew.-% und besonders bevorzugt kleiner 30 Gew.-%. Der Gelgehalt kann auch 0 Gew.-% betragen, im allgemeinen wird er aber einen messbaren Wert zwischen 0 und den vorstehenden Maximalgrenzen haben.

Der Gelgehalt wird entsprechend der nachstehenden Methode bestimmt. 2 g (Gramm) der wässrigen Dispersion wird auf einem Träger beschichtet und bei Raumtemperatur (21 °C, 1 bar) 14 Tage lang getrocknet. Von dem erhaltenen trockenen Dispersionsfilm werden 0,5 g gewogen und danach in 49,5 g Tetrahydrofuran (THF) gelöst. Nach 4 Tagen (bei 21 °C, 1 bar) wird der in THF unlösliche Anteil mit einem 125 µm Perlonfilter abgetrennt, 24 Stunden getrocknet (21 °C, 1 bar) und gewogen. Der Gelgehalt ist der prozentuale Anteil dieser unlöslichen Bestandteile am vorher bestimmten Gewicht des getrockneten Dispersionsfilms.

Bei dem Klebsoff-Polymer handelt es sich insbesondere um ein durch radikalische Polymerisation von ethylenisch ungesättigten Verbindungen (Monomere) erhältliches Polymer, welches zu mindestens 60 Gew.-% aus sogenannten Hauptmonomeren, ausgewählt aus C₁ bis C₂₀ Alkyl(meth)acrylaten, Vinylaromaten mit bis zu 20 C-Atomen, ethylenisch ungesättigten Nitrilen, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren, aufgebaut ist.

Das Polymer besteht vorzugsweise zu mindestens 60 Gew.-%, insbesondere zu mindestens 80 Gew.-%, besonders bevorzugt zu mindestens 90 Gew.-% aus den vorstehenden Hauptmonomeren.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Als vinylaromatische Verbindungen kommen Vinyltoluol, o- und p-Methylstyrol, o-Butylstyrol, 4-n-Butylstyrol, 4-n-Decylstyrol und vorzugsweise Styrol in Betracht. Beispiele für Nitrile sind Acrylnitril und Methacrylnitril.

Als Vinylether zu nennen sind z. B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Insbesondere ist das Polymer zu mindestens 60 Gew.-%, besonders bevorzugt zu mindestens 80 Gew.-% und ganz besonders bevorzugt zu mindestens 90 Gew.-% aus C₁ bis C₂₀ Alkyl(meth)acrylaten aufgebaut.

In einer besonderen Ausführungsform enthält das Klebstoff-Polymer Hauptmonomere mit einer Glasübergangstemperatur unter -40 °C und Hauptmonomere mit einer Glasübergangstemperatur größer 0 °C.

Unter der Glasübergangstemperatur eines Monomeren wird dabei die Glasübergangstemperatur des Homopolymerisats verstanden, wie sie in einschlägigen Nachschlagswerken angegeben ist.

Besonders bevorzugt besteht das Klebstoff-Polymer zu mindestens 60 Gew.-% aus C1 bis C20 Alkyl(meth)acrylaten mit einer Glasübergangstemperatur kleiner -40 °C und zu 0,5 bis 30 Gew. aus C1 bis C20 Alkyl(meth)acrylaten mit einer Glasübergangstemperatur größer 0 °C, vinylaromatischen Monomeren mit einer Glasübergangstemperatur größer 0 °C oder deren Gemische.

Ganz besonders bevorzugt besteht das Klebstoff-Polymer zu mindestens 60, insbesondere zu mindestens 80 Gew.-% aus C1 bis C20 Alkyl(meth)acrylaten mit einer Glasübergangstemperatur kleiner -40 °C und zu 1 bis 20 Gew.-%, insbesondere zu 2 bis 10 Gew.-% aus C1 bis C20 Alkyl(meth)acrylaten mit einer Glasübergangstemperatur größer 0 °C, vinylaromatischen Monomeren mit einer Glasübergangstemperatur größer 0 °C oder deren Gemische.

Insbesondere enthält das Klebstoff-Polymer sowohl C1 bis C20 Alkyl(meth)acrylaten mit einer Glasübergangstemperatur größer 0 °C, als auch vinylaromatischen Monomeren mit einer Glasübergangstemperatur größer 0 °C.

Das Gewichtsverhältnis der C1 bis C20 Alkyl(meth)acrylaten mit einer Glasübergangstemperatur größer 0 °C zu vinylaromatischen Monomeren mit einer Glasübergangstemperatur größer 0 °C kann z. B. 1 zu 10 bis 10 zu 1, besonders bevorzugt 2 zu 10 bis 10 zu 2 betragen.

Geeignete C1 bis C20 Alkyl(meth)acrylaten mit einer Glasübergangstemperatur kleiner -40 °C sind insbesondere n-Butylacrylat und 2-Ethylhexylacrylat.

Geeignete C1 bis C20 Alkyl(meth)acrylate und vinylaromatische Monomere mit einer Glasübergangstemperatur größer 0 °C sind insbesondere Methylmethacrylat, Methylacrylat, t-Butylacrylat, n-Butylmethacrylat und Styrol.

Neben den Hauptmonomeren kann das Polymer weitere Monomere enthalten, z. B. Monomere mit Carbonsäure-, Sulfonsäure- oder Phosphonsäuregruppen (im nachfolgenden Säure-Monomere genannt). Bevorzugt sind Säure-Monomere mit Carbonsäuregruppen.

Unter den Säuregruppen, bzw. Carbonsäuregruppen werden auch deren Salze verstanden. Im Falle der Salze handelt es sich bevorzugt um Salze mit flüchtigen Basen, z. B. Ammoniak.

Als Säure-Monomere genannt seien z. B. Acrylsäure, Methacrylsäure, Itaconsäure, Maleinsäure oder Fumarsäure.

In einer besonderen Ausführungsform enthält das Klebstoff-Polymer Säure-Monomere, insbesondere in Mengen von 0,05 bis 5 Gew.-%, besonders bevorzugt von 0,1 bis 3 Gew.-%, bezogen auf das Klebstoff-Polymer.

Weitere Monomere sind z. B. auch Hydroxylgruppen enthaltende Monomere, insbesondere C₁-C₁₀-Hydroxyalkyl(meth)acrylate oder (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

In einer besonderen Ausführungsform enthält das Klebstoff-Polymer Hydroxylgruppen enthaltende Monomere, insbesondere C₁-C₁₀-Hydroxyalkyl(meth)acrylate. Besonders bevorzugt ist das Klebstoff-Polymer zu 0.1 bis 10 Gew.-%, besonders bevorzugt zu 0,5 bis 5 Gew.-% und ganz besonders bevorzugt zu 1 bis 4 Gew.-% aus Hydroxylgruppen enthaltende Monomeren aufgebaut.

Außer den genannten Monomeren kann das Klebstoff-Polymer auch noch sonstige Monomere, z. B. in Mengen von 0 bis 20, bzw. 0 bis 10 Gew.-% oder 0 bis 5 Gew.-% enthalten. Ein Gehalt an sonstigen Monomeren ist jedoch nicht erforderlich, er kann daher insbesondere 0 % betragen.

Besonders bevorzugte Klebstoff-Polymere sind daher z. B. aufgebaut aus:
60 bis 95 Gew.-% C1 bis C20 Alkyl(meth)acrylaten mit einer Glasübergangstemperatur kleiner -40 °C,
0,5 bis 30 Gew. C1 bis C20 Alkyl(meth)acrylaten mit einer Glasübergangstemperatur größer 0 °C, vinylaromatischen Monomeren mit einer Glasübergangstemperatur größer 0 °C oder deren Gemische,
0,05 bis 5 Gew.-% Säure-Monomere,
0,1 bis 10 Gew.-% Hydroxylgruppen enthaltende Monomere und
0 bis 20 Gew.-% sonstige Monomere.

Die Herstellung des Klebstoff-Polymeren erfolgt in einer bevorzugten Ausführungsform durch Emulsionspolymerisation, es handelt sich daher um ein Emulsionspolymerisat in Form einer wässrigen Polymerdispersion.

Bei der Emulsionspolymerisation werden ionische und/oder nicht-ionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 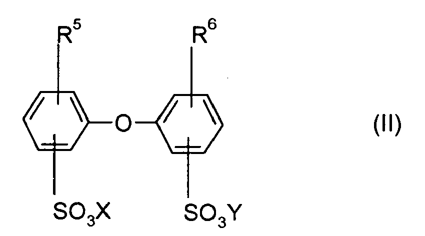 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax^{®} 2A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten^{®} E 3065, Disponil^{®} FES 77, Lutensol^{®} AT 18, Steinapol VSL, Emulphor NPS 25.

Für die vorliegende Erfindung sind ionische Emulgatoren oder Schutzkolloide bevorzugt. Besonders bevorzugt handelt es sich um ionische Emulgatoren, insbesondere Salze und Säuren, wie Carbonsäuren, Carboxylate, Sulfonsäuren und Sulfate, Sulfonate oder Carboxylate.

Die grenzflächenaktive Substanz wird üblicherweise in Mengen von 0,1 bis 10 Gew.-Teile, vorzugsweise 0,2 bis 5 Gew.-Teile bezogen auf 100 Gew.-Teile der zu polymerisierenden Monomeren verwendet.

Wasserlösliche Initiatoren für die Emulsionspolymerisation sind z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid.

Geeignet sind auch sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die Molmasse verringert wird. Geeignet sind z. B. Verbindungen mit einer Thiolgruppe wie tert.-Butylmercaptan, Thioglycolsäureethylester, Mercaptoethanol, Mercaptopropyltrimethoxysilan oder tert.-Dodecylmercaptan.

Die Emulsionspolymerisation erfolgt in der Regel bei 30 bis 130, vorzugsweise 50 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wässrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Das so hergestellte Polymer wird vorzugsweise in Form seiner wässrigen Dispersion verwendet.

Die mittlere Teilchengröße der in der wässrigen Dispersion dispergierten Polymerteilchen ist vorzugsweise 30 - 1000 nm, insbesondere kleiner 750 nm. Besonders bevorzugt liegt die mittlere Teilchengröße zwischen 100 und 500 nm.

Unter mittlerer Teilchengröße wird hier der d₅₀-Wert der Teilchengrößenverteilung verstanden, d.h. 50 Gew.-% der Gesamtmasse aller Teilchen haben einen kleineren Teilchendurchmesser als der d₅₀-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden.

Der pH-Wert der Polymerdispersion wird vorzugsweise auf pH größer 4,5, insbesondere auf einen pH-Wert zwischen 5 und 8 eingestellt.

Die Polymerdispersion enthält vorzugsweise weniger als 1500 ppm, insbesondere weniger als 1000 ppm, besonders bevorzugt weniger als 500 ppm flüchtige organische Anteile TVOC. Unter TVOC (total volatile organic compounds) werden alle organischen Verbindungen mit einem Siedpunkt kleiner 250 °C bei 1 bar verstanden.

Der Haftklebstoffe kann allein aus dem Klebstoff-Polymeren bzw. der wässrigen Dispersion des Klebstoff-Polymeren bestehen.

Der Haftklebstoff kann weitere Zusatzstoffe enthalten, z. B. Füllstoffe, Farbstoffe, Verlaufsmittel, Verdicker oder Tackifier (klebrigmachende Harze).

Tackifier sind z. B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit.

Desweiteren finden auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt vorzugsweise 0 bis 100 Gew.-Teile. besonders bevorzugt 0 bis 50 Gew.-Teile. bezogen auf 100 Gew.-Teile Polymer (fest/fest).

Vorzugsweise kann der Haftklebstoff Verlaufsmittel (z. B. Lumiten) enthalten, z. B. in Mengen von 0,05 bis 3 Gew.-Teilen auf 100 Gew.-Teile Polymer.

Für die Verwendung in wiederverschließbaren Verpackungen darf der Haftklebstoff keine zu große innere Festigkeit (Kohäsion) haben. Beim ersten Öffnen der Verpackung soll es zu einem Bruch möglichst in der Mitte der Haftklebstoffschicht (Kohäsionsbruch) kommen, so dass danach sowohl die Deckelfolie als auch der Behälterrand mit Haftklebstoff beschichtet sind und so eine gute Wiederverschließbarkeit gewährleistet wird.

### Das Klebstoff-Polymer gewährleistet einen derartigen Kohäsionsbruch.

Die Kohäsion und Adhäsion des Haftklebstoffs kann weiter durch Auswahl geeigneter Polymere und gegebenenfalls geeigneter Additive, insbesondere Tackifier, auf die gewünschten Bedingungen eingestellt werden. Für wiederverschliessbare Verpackungen sollte vorzugsweise jedoch nur soviel Tackifier zugesetzt werden, dass es noch immer zu einem Kohäsionsbruch kommt.

Zur Herstellung der Haftklebstoffschicht auf dem Träger kann das Trägermaterial in üblicher Weise beschichtet werden.

Übliche Auftragsmengen (nach Trocknung) sind z. B. 1 bis 50 g Haftklebstoff, besonders bevorzugt 5 bis 30 g/m².

### Zur siegelbaren Schicht

Die siegelbare Schicht enthält vorzugsweise ein Polymer, welches bei Raumtemperatur (21 °C, 1 bar) blockfest, d. h. der ausgebildete Polymerfilm nicht klebrig ist. Besonders bevorzugt ist das Polymer bis +50 °C blockfest.
Es eignen sich alle Polymere oder Polymersysteme, die siegelbar sind, d. h. die ausgebildete Siegelschicht kann bei ausreichenden Drucken und Temperaturen mit einer anderen Schicht verschweisst, d. h. dauerhaft verbunden werden. Diese andere Schicht kann aus dem gleichen Polymer oder einem anderen Polymer bestehen.

Bei der siegelbaren Schicht kann es sich um eine Polymerfolie handeln, welche als Schicht c) aufkaschiert wird. Die Siegelschicht c) kann aber auch aus Polymerlösungen oder Polymerdispersionen hergestellt werden, bevorzugt sind Polymerlösungen oder Polymerdispersionen in Wasser. Die siegelbare Schicht kann durch Verfilmung und Entfernung des Wasser aus den Polymerlösungen oder Polymerdispersionen hergestellt werden.

Die siegelbare Schicht c) besteht vorzugsweise aus einem Polymer, welches zu mindestens 20 Gew.-%, besonders bevorzugt zu mindestens 40 Gew.-% und ganz besonders bevorzugt zu mindestens 60 Gew.-% aus einem Olefin aufgebaut ist (im nachfolgenden kurz Polyolefin genannt).

Als Olefin seien insbesondere Ethylen oder Propylen genannt.

Besonders bevorzugt handelt es sich bei dem Polymer um ein Polymer, welches zu mehr als 60 Gew.-% aus Ethylen besteht.

In Betracht kommen Homopolymere der Olefine, insbesondere Polyethylen, bzw. Polypropylen, oder deren Copolymere mit anderen Monomeren.

Es kann sich um niedermolekulere Homo- oder Copolymere handeln, z. B. um Wachse, wie sie in DE-A 102005035979 beschrieben sind.

Es kann sich aber auch um hochmolekulare Polymere, z. B. Polyethylen, handeln, die thermoplatisch verarbeitbar sind und z. B. in Form von Folien extrudiert werden können.

Polyolefine werden insbesondere mit sich selbst siegelbar, d. h. die andere Schicht, mit der eine dauerhafte Verbindung hergestelllt werden soll, ist vorzugsweise aus dem gleichen Material.

Die siegelbare Schicht kann auch aus Polymeren bestehen, die aus den oben genannten Monomeren des Klebstoff-Polymeren aufgebaut sind; das erhaltene Polymer muss jedoch blockfest sein, ist also kein Haftklebstoff. Geeignet sind insbesondere die oben genanten (Meth)acrylmonomeren und vinylaromatischen Monomeren bzw. ihre Mischungen. Geeignete Polymer bestehen z. B. zu mehr als 60 Gew. aus Meth)acrylmonomeren und vinylaromatischen Monomeren. Unter dem Handelsnamen Joncryl^{®} sind wässrige Polymerlösungen von derartigen Polyacrylaten, bzw. Copolymeren von Acrylaten und Styrol bekannt, die für die siegelbare Schicht verwendet werden können. Die vorstehende Polymere eignen sich insbesondere für die Versiegelung mit Schichten aus anderen Polymeren, insbesondere Schichten aus Polyestern, z. B. PET, Polystyrol oder Polyvinylchlorid.

### Zum Laminat allgemein

Zur Herstellung des Laminats kann zunächst der Träger mit dem wässrigen Haftklebstoff, wobei es sich vorzugsweise um eine Haftklebstoffdispersion handelt, beschichtet werden, wie oben ausgeführt.

Auch die Herstellung der siegelbaren Schicht kann durch Beschichtung mit einer wässrigen Polyolefindispersion erfolgen, wie ebenfalls in DE-A 102005035979 beschrieben ist oder entsprechend mit einer anderen Polymerlösung oder Polymerdispersion erfolgen.

Die siegelbare Schicht kann aber auch in Form einer Polyolefinfolie vorliegen und einfach auf den mit Haftklebstoff-beschichteten Träger aufkaschiert werden.

Das erfindungsgemäße Laminat hat somit folgenden Aufbau, wobei die Reihenfolge der Schichten der räumlichen Anordnung entspricht:
a) einem Träger
b) einer Haftklebstoffschicht
c) einer siegelbaren Schicht.

Zwischen Träger und Haftklebstoffschicht einerseits und zwischen Haftklebstoffschicht und siegelbarer Schicht können weitere Schichten sein, z. B. Schichten, die eine Barriere gegen unerwünschte Gase (Sauerstoff, Wasserdampf) bilden, einen UV-Schutz gewährleisten, als Sauerstofffänger oder Migrationsschutz wirken oder als Haftvermittler dienen.

Entsprechende Schichten können z. B. auch auf der Rückseite des Trägers aufgebracht sein.

Insbesondere können auch beliebige Schichten, z. B. auch die Vorder- oder Rückseite des Trägers bedruckt sein.

Geeignete Laminate benötigen jedoch nicht zwingend weitere Schichten, die Haftklebstoffschicht kann unmittelbar auf dem Träger und die siegelbare Schicht kann unmittelbar auf der Haftklebstoffschicht aufgebracht sein.

Das Laminat eignet sich als siegelbarer Bestandteil von wiederverschließbaren Verpackungen. Derartige Verpackungen bestehen im allgemeinen aus einem Behälter und einer Deckelfolie für den Behälter.

Das erfindungsgemäße Laminat eignet sich sowohl als Deckelfolie als auch als Behälter.

Siegelbar heißt, dass das mehrschichtige Laminat (als Deckelfolie bzw. Behälter) mit einem weiteren Substrat verbunden werden kann. Im allgemeinen wird eine derartige Verbindung (Siegelung) unter Druck- und/oder Temperaturerhöhung vorgenommen, nachdem das zu verpackende Gut eingebracht worden ist.

Wird das obige Laminat als Deckelfolie verwendet, so handelt es sich bei dem weiteren Substrat um den Behälter; wird das obige Laminat als Behälter verwendet, so handelt es sich bei dem weiteren Substrat um die Deckelfolie.

Insbesondere hat das weitere Substrat zumindest an den Stellen, an denen eine Verbindung mit dem erfindungsgemäßen Laminat erfolgen soll, d. h. an der Siegelnaht, eine äußere Beschichtung aus dem Material, welches mit der siegelbaren Schicht c) des Laminats siegelbar ist, bzw. besteht aus einem derartigen Material (siehe obige Ausführungen zur siegelbaren Schicht).
Die Siegelung, d. h. das Zusammenpressen der beiden Substrate erfolgt vorzugsweise bei einem Druck von 1 bis 20 bar besonders bevorzugt von 1 bis 5 bar, die Temperatur beträgt insbesondere 30 bis 200 °C, besonders bevorzugt 70 bis 120 °C, die Dauer ist insbesondere 0,5 bis 5, insbesondere 1 bis 2 Sekunden.

Besonders bevorzugt wird das mehrschichtiges Laminat als Deckelfolie verwendet, insbesondere zum Verschließen eines Behälters, welcher eine Siegelschicht aus einem Polyolefin aufweist.

Vorzugsweise wird das mehrschichtige Laminat zum Verpacken von Waren verwendet, insbesondere zum Verschließen eines Behälters, der die Waren enthält.

Bei den Waren handelt es sich insbesondere um Lebensmittel, z. B. Fleisch-, Wurst-, oder Käseprodukte.

Die mit dem erfindungsgemäßen Laminat hergestellten Verpackungen sind wiederverschließbar. Beim Erstmaligen Öffnen der Verpackung wird die Haftklebstoffschicht freigelegt. Es kommt vorzugsweise zu einem Kohäsionsbruch in der Haftklebstoffschicht. Die Haftklebstoffschicht löst sich nicht an einer der Grenzflächen, die Trennung erfolgt vielmehr innerhalb der Haftklebstoffschicht, so dass danach die Außenflächen beider getrennter Substrate mit Haftklebstoff beschichtet sind. In diesem Fall sind beide Flächen klebrig.

Die Verpackung ist sehr oft wiederverschließbar, wobei die Festigkeit nach wiederholtem Verschließen kaum nachlässt.

Die Laminate haben einen einfachen Schichtaufbau, sind geruchsfrei und weitgehend frei von flüchtigen Bestandteilen. Sie eignen sich für die Verpackung von Lebensmitteln. Auf die Mitverwendung chlorhaltiger Verbindungen in den Laminaten oder Verpackungen kann verzichtet werden. Die Verpackung lässt sich sehr häufig Öffnen und Schließen, sie hat eine sehr gute Wiederverschließbarkeit.

### Beispiele

Alle Prozentangaben sind Gewichtsangangaben, wenn nichts anderes angegeben ist. Die Angabe eines Gehalts bezieht sich auf den Gehalt in wässriger Lösung oder Dispersion.

Dispsonil FES 77: 32 %-ige wässrige Lösung des Natriumsalzes des Schwefelsäurehalbesters eines mit 30 EO Einheiten ethoxylierten C12-C14 Alkylrests.

Lumiten ISC: wässrige Lösung des Diethylhexylesters der Sulfobernsteinsäure

### Beispiel 1

| | | | | |
|---|---|---|---|---|
| Feststoffgehalt: | 61.07 % | | Monomermenge: 604.09 g | |
| Rezeptur: | | | | |
| Zuordnung | Menge | Einsatzstoff | Gehalt | Anteil |
| Vorlage | Gesamt: 99.15 g | | | |
| | 98.60 g | VE-Wasser | 100.00 % | 16.32 |
| | 0.55 g | Saat T 6772 | 33.00 % | 0.03 |
| | | | | |
| Zugabe 1 | Gesamt: 8.55 g | | | |
| | 4.66 g | VE-Wasser | 100.00 % | 0.77 |
| | 3.88 g | Natriumperoxodisulfat | 7.00 % | 0.05 |
| | | | | |
| Zulauf 1 | Gesamt: 749.65 g | | | |
| | 120.64 g | VE-Wasser | 100.00 % | 19.97 |
| | 22.65 g | Disponil FES 77 | 32.00 % | 1.20 |
| | 2.08 g | Lumiten I - SC | 58.00 % | 0.20 |
| | 2.90 g | Acrylsäure | 100.00 % | 0.48 |
| | 11.96 g | 2-Hydroxypropylacrylat | 100.00 % | 1.98 |
| | 11.96 g | Styrol | 100.00 % | 1.98 |
| | 47.84 g | Methylacrylat | 100.00 % | 7.92 |
| | 48.45 g | Methylmethacrylat | 100.00 % | 8.02 |
| | 480.97 g | Ethylhexylacrylat | 100.00% | 79.62 |
| | 0.19 g | Terpinolen | 95.00 % | 0.03 |
| | | | | |
| Zulauf 2 | Gesamt: 44.87 g | | | |
| | 44.87 g | Natriumperoxodisulfat | 7.00 % | 0.52 |
| | | | | |
| Zulauf 3 | Gesamt: 56.85 g | | | |
| | 44.29 g | VE-Wasser | 100.00 % | 7.33 |
| | 12.56 g | Natronlauge | 25.00 % | 0.52 |
| | | | | |
| Zulauf 4 | Gesamt: 9.06 g | | | |
| | 9.06 g | tert.-Butylhydroperoxid | 10.00 % | 0.15 |
| | | | | |
| Zulauf 5 | Gesamt: 7.25 g | | | |
| | 7.25 g | Rongalit C | 10.00 % | 0.12 |

Die Vorlage wurde in einem Rührkessel auf 86 °C aufgeheizt und bei dieser Temperatur die Polymerisation durchgeführt. Zunächst wurde Zugabe 1 vorgelegt und 4 Minuten polymerisiert. Danach wurde Zulauf 1 und Zulauf 2 gestartet und innerhalb von 4 Stunden zugegeben. Danach wurde Zulauf 3 innerhalb einer Stunde zugegeben. Anschließend wurden Zulauf 4 und 5 parallel in einer Stunde zugegeben. Die erhaltene Dispersion wurde auf Raumtemperatur abgekühlt.

### Beispiel 2 (zum Vergleich)

| | | | | |
|---|---|---|---|---|
| Feststoffgehalt: 60.00 % | | | Monomermenge: 644.53 g | |
| | | | | |
| Rezeptur: | | | | |
| Zuordnung | Menge | Einsatzstoff | Gehalt | Anteil |
| Vorlage | Gesamt: 98.17 g | | | |
| | 90.23 g | VE-Wasser | 100.00% | 14.00 |
| | 0.98 g | Saat T 6772 | 33.00 % | 0.05 |
| | 6.96 g | Von Zulauf 2 | | 10.00 |
| | | | | |
| Zulauf 1 | Gesamt: 891.91 g | | | |
| | 226.72g | VE-Wasser | 100.00% | 35.18 |
| | | 15.11 g Disponil FES 77 | 32.00 % | 0.75 |
| | 5.56 g | Lumiten I - SC | 58.00 % | 0.50 |
| | 6.45 g | 2-Acrylamido-2-methylpropansulfonsäure | 100.00% | 1.00 |
| | 19.34 g | Styrol | 100.00% | 3.00 |
| | 25.78 g | Methylacrylat | 100.00% | 4.00 |
| | 580.08g | Ethylhexylacrylat | 100.00% | 90.00 |
| | 12.89 g | 2-Hydroxypropylacrylat | 100.00% | 2.00 |
| | | | | |
| Zulauf 2 | Gesamt: 69.61 g | | | |
| | 64.45 g | Natriumperoxodisulfat | 7.00% | 0.70 |
| | 5.16 g | Natronlauge | 25.00% | 0.20 |
| | | | | |
| Zulauf 3 | Gesamt: 11.82 g | | | |
| | 6.45 g | VE-Wasser | 100.00% | 1.00 |
| | 5.37 g | Acetonbisulfit | 12.00% | 0.10 |
| | | | | |
| Zulauf 4 | Gesamt: 12.89 g | | | |
| | 6.45 g | VE-Wasser | 100.00% | 1.00 |
| | 6.45 g | tert.-Butylhydroperoxid | 10.00% | 0.10 |

Die Vorlage wurde in einem Rührkessel auf 85 °C aufgeheizt und bei dieser Temperatur die Polymerisation durchgeführt. Zunächst wurde eine Teilmenge von 10 Gew.-% von Zulauf 2 zugegeben. Danach wurden Zulauf 1 und Zulauf 2 gestartet. 6 % von Zulauf 1 wurde in 30 Minuten und der Rest von Zulauf 1 in 3 Stunden zugegeben. Zulauf 2 wurde in 4 Stunden zugegeben. Danach wurden Zulauf 3 und 4 parallel in einer Stunde zugegeben. Die erhaltene Dispersion wurde auf Raumtemperatur abgekühlt.

**Tabelle 1: Zusammensetzung der Polymere**

| | Beispiel 1 | Beispiel 2 |
|---|---|---|
| 2-Ethylhexylacrylat | 79,62 | 90,00 |
| Methylmethacrylat | 8,02 | - |
| Acrylsäure | 0,48 | - |
| Vinylacetat | - | - |
| Methylacrylat | 7,92 | 4,0 |
| Hydroxypropylacrylat | 1,98 | 2,00 |
| Styrol | 1,98 | 3,00 |
| 2-Acrylamido-2-methylpropansulfonsäure | - | 1,00 |
| Terpinolen | 0,03 | - |
| Saat | 0,03 | 0,05 |
| Disponil FES 77 | 1,20 | 0,75 |
| Lumiten ISC | 0,20 | 0,50 |
| Natriumpersulfat | 0,52 | 0,70 |
| Gelgehalt | 27 % | 61 % |
| Tg | -45,9 °C | -61,8 °C |

### Beispiel 3

Als Bespiel 3 wurde Acronal^{®} V115, eine Polyacrylatdispetsion für Haftklebstoffe verwendet. Acronal V115 wurde in dem Beispiel der DE-A 102005035979 zur Herstellung des Laminats verwendet, Acronal V115 hat einen Gelgehalt von 56 Gew.-%.

### Haftklebstoff

Als Haftklebstoff wurden die oben genannten Polymerdispersionen ohne weitere Zusätze verwendet.

### Herstellung des Laminats

Eine Polyesterfolie (Folie 1: Polyethylentherephthalat, PET) mit einer Schichtdicke von 36 µm wurde mit 17 g/m2 Haftklebstoff (fest, ohne Wasser) beschichtet und 3 Minuten bei 90 °C getrocknet. Dann wurde die beschichtete Folie mit einer 25 µm Polyethylenfolie (Folie 2: Polyethylen, PE) laminiert.

Der Schichtaufbau des Laminats war daher wie folgt:
Träger PET
Haftklebstoffschicht
PE-Siegelschicht

### Versiegelung

### Beispiele 1 bis 3

Das Laminat wurde mit der PE- Seite einer PET/PE Verbundfolie (Folie 3: Schichtdicke 65 µm) versiegelt. Das Laminat und Folie 3 wurden dazu 3 Sekunden bei 3 bar miteinander verpresst; Folie 1 wurde dazu auf 145 °C erwärmt, Folie 3 wurde nicht erwärmt. Der erhaltene versiegelte Verbund hatte eine Dicke von ca 10 mm.

Der Schichtaufbau des gesiegelten Verbunds war daher wie folgt (Reihenfolge gibt die räumliche Anordnung wieder):
PET-Träger
Haftklebstoff
PE
PE
PET

### Alternativ mögliches Laminat und Versiegelung

Eine Polyesterfolie (Folie 1: Polyethylentherephthalat, PET) mit einer Schichtdicke von 36 µm wurde mit 17 g/m2 Haftklebstoff (fest, ohne Wasser) beschichtet und 3 Minuten bei 90 °C getrocknet. Danach wurde die beschichtete Folie mit einer weiteren Dispersion (Siegeldispersion) beschichtet. Als Siegeldispersion wird eine 1:1 Mischung von Joncryl^{®} 8211 Acrylatdispersion und Joncryl 2648 Acrylat-Copolymer Dispersion benutzt. 6 g/m² Siegeldispersion (fest, ohne Wasser) wird auf der Haftklebstoffschicht beschichtet und 3 Minuten bei 90 °C getrocknet. Die erhaltene trockene Beschichtung ist blockfest (nicht klebrig).

Das Laminat wurde dann wie oben beschrieben mit einer PE/PET Folie (Folie 3) versiegelt. Alternativ kann auch eine Versiegelung mit einer Polystyrolfolie (PS) oder einer Polyvinylchloridfolie (PVC) erfolgen.

### Der Schichtaufbau eines derartigen gesiegelten Verbunds ist wie folgt:

PET-Träger
Haftklebstoff
Film aus Joncryl
PE
PET
oder
PET-Träger
Haftklebstoff
Film aus Joncryl
PS oder PVC

### Übersicht über versiegelte Verbunde

| Haftklebstoff Aus Beispiel | Gelgehalt Gew.-% | Siegelschicht des Laminats | Siegelschicht des anderen Substrat |
|---|---|---|---|
| 1 | 27 | PE | PE |
| 2 | 61 | PE | PE |
| 3 | 56 | PE | PE |

### Prüfung des gesiegelten Verbunds auf Wiederverschließbarkeit:

Der so hergestellte, gesiegelte Verbund wurde einer Auftrennprüfung unterzogen. Dabei wurden Folie 3 und das Laminat mit einer konstanten Abzugsgeschwindigkeit von 300 mm/Minuten mehrfach getrennt. Nach jeder Trennung erfolgte eine Wiederverklebung der Folie 3 mit dem Laminat mit einem Anrollgerät (Gewicht von 2 kg, Geschwindigkeit 10 mm/Sek). In der nachstehenden Tabelle ist die mittlere Kraft während des konstanten Abziehens und die aufgetretene Maxiamlkraft in N/10 mm angegeben.

| Anzahl der erfolgten Auftrennungen | Beispiel 1 mittlere Kraft | Beispiel 1 Maximal kraft | Beispiel 2 (Vergleich) mittlere Kraft | Beispiel 2 (Vergleich) Maximal Kraft | Beispiel 3 (Vergleich) mittlere Kraft | Beispiel 3 (Vergleich) Maximal kraft |
|---|---|---|---|---|---|---|
| 1 | 7,6 | 8,8 | 3,8 | 4,1 | 4,8 | 5,3 |
| 2 | 1,2 | 1,5 | < 0,5 | < 0,5 | 0,4 | 0,9 |
| 3 | 1,4 | 1,7 | Abbruch | Abbruch | 0,5 | 0,8 |
| 4 | 1,5 | 1,7 | | | 0,4 | 0,9 |
| 5 | 1,4 | 1,6 | | | < 0,5 | < 0,5 |
| 6 | 1,3 | 1,4 | | | Abbruch | Abbruch |
| 7 | 1,4 | 1,6 | | | | |
| 8 | 1,4 | 1,6 | | | | |
| 9 | 1,2 | 1,4 | | | | |
| 10 | 1,3 | 1,5 | | | | |
| Bruchbild | K | K | K | K | K | K |

| | | | | | | |
|---|---|---|---|---|---|---|
| K: Kohäsionsbruch | | | | | | |

## Patentansprüche

1. Mehrschichtiges Laminat aus mindestens
a) einem Träger
b) einer Haftklebstoffschicht und
c) einer siegelbaren Schicht,
wobei sich die Haftklebstoffschicht zwischen dem Träger und der siegelbaren Schicht befindet, **dadurch gekennzeichnet, dass** der Haftklebstoff ein polymeres Bindemittel enthält, welches eine Glasübergangstemperatur von -60 bis -0 °C und einen Gelgehalt kleiner 50 Gew.-% hat (im nachfolgenden kurz Klebstoff-Polymer genannt), **dadurch gekennzeichnet, dass** es sich bei dem Klebstoff-Polymer um ein Emulsionspolymerisat handelt.

2. Mehrschichtiges Laminat gemäß Anspruch 1, **dadurch gekennzeichnet, dass** es sich bei dem Träger um eine transparente Polymerfolie, Metallfolie oder metallisierte Polymerfolie handelt.

3. Mehrschichtiges Laminat gemäß Anspruch 1 oder 2, **dadurch gekennzeichnet, dass** es sich bei dem Träger um eine Polyolefin- oder Polyesterfolie handelt.

4. Mehrschichtiges Laminat gemäß einem der Ansprüche 1 bis 3, **dadurch gekennzeichnet, dass** es sich bei dem Träger um einen Verbund aus unterschiedlichen Materialien, z. B. Papier und Polyethylen, handelt.

5. Mehrschichtiges Laminat gemäß einem der Ansprüche 1 bis 4, **dadurch gekennzeichnet, dass** die Haftklebstoffschicht und das Klebstoff-Polymer kein Vinylacetat (weder in freier noch in einpolymerisierter Form) enthalten.

6. Mehrschichtiges Laminat gemäß einem der Ansprüche 1 bis 5, **dadurch gekennzeichnet, dass** das Klebstoff-Polymer zu mindestens 60 Gew.-% aus C1 bis C20 Alkyl(meth)acrylaten besteht.

7. Mehrschichtiges Laminat gemäß einem der Ansprüche 1 bis 6, **dadurch gekennzeichnet, dass** das Klebstoff-Polymer einen Gelgehalt kleiner 40 Gew.-% hat.

8. Mehrschichtiges Laminat gemäß einem der Ansprüche 1 bis 7, **dadurch gekennzeichnet, dass** die siegelbare Schicht aus einem bei Raumtemperatur blockfesten Polymer besteht.

9. Mehrschichtiges Laminat gemäß einem der Ansprüche 1 bis 8, **dadurch gekennzeichnet, dass** die Siegelschicht durch Kaschierung mit einer Polymerfolie oder Verfilmung einer Polymerlösung oder Polymerdispersion in Wasser erhältlich ist.

10. Verwendung des mehrschichtigen Laminats gemäß einem der Ansprüche 1 bis 9 als siegelbarer Bestandteil, z. B. Behälter oder Deckelfolie, einer wiederverschließbaren Verpackung.

11. Verfahren zum Verpacken von Waren in wiederverschließbaren Verpackungen, **dadurch gekennzeichnet, dass** ein mehrschichtiges Laminat gemäß einem der Ansprüche 1 bis 9 Bestandteil der wiederverschließbaren Verpackung ist.

12. Wiederverschließbare Verpackungen erhältlich durch Verwendung eines Laminats gemäß einem der Ansprüche 1 bis 9.

## Claims

1. A multilayer laminate composed of at least
a) a backing,
b) a pressure-sensitive adhesive layer, and
c) a sealable layer,
the pressure-sensitive adhesive layer being located between the backing and the sealable layer, and wherein the pressure-sensitive adhesive comprises a polymeric binder having a glass transition temperature of -60 to -0°C and a gel content of less than 50% by weight (and referred to below for short as adhesive polymer), and wherein the adhesive polymer is an emulsion polymer.

2. The multilayer laminate according to claim 1, wherein the backing is a transparent polymer film, metal foil or metallized polymer film.

3. The multilayer laminate according to claim 1 or 2, wherein the backing is a polyolefin film or polyester film.

4. The multilayer laminate according to any one of claims 1 to 3, wherein the backing is a composite of different materials, e.g., paper and polyethylene.

5. The multilayer laminate according to any one of claims 1 to 4, wherein the pressure-sensitive adhesive layer and the adhesive polymer comprise no vinyl acetate (either in free form or in copolymerized form).

6. The multilayer laminate according to any one of claims 1 to 5, wherein the adhesive polymer is composed of at least 60% by weight of C1 to C20 alkyl (meth)acrylates.

7. The multilayer laminate according to any one of claims 1 to 6, wherein the adhesive polymer has a gel content of less than 40% by weight.

8. The multilayer laminate according to any one of claims 1 to 7, wherein the sealable layer is composed of a polymer which is blocking-resistant at room temperature.

9. The multilayer laminate according to any one of claims 1 to 8, wherein the sealing layer is obtainable by lamination with a polymer film or by filming of a polymer solution or polymer dispersion in water.

10. The use of the multilayer laminate according to any one of claims 1 to 9 as a sealable constituent, e.g., tray or film lid, of a reclosable pack.

11. A method of packaging goods in a reclosable pack, wherein a multilayer laminate according to any one of claims 1 to 9 is a constituent of the reclosable pack.

12. A reclosable pack obtainable using a laminate according to any one of claims 1 to 9.

## Revendications

1. Stratifié multicouche constitué d'au moins
a) un support
b) une couche adhésive sensible à la pression et
c) une couche scellable,
la couche adhésive sensible à la pression se trouvant entre le support et la couche scellable, **caractérisé en ce que** l'adhésif sensible à la pression contient un liant polymère qui a une température de transition vitreuse de -60 à -0 °C et une teneur en gel inférieure à 50 % en poids (par la suite nommé polymère adhésif en abrégé), **caractérisé en ce que** le polymère adhésif est un polymère en émulsion.

2. Stratifié multicouche selon la revendication 1, **caractérisé en ce que** le support est une feuille polymère transparente, une feuille métallique ou une feuille polymère métallisée.

3. Stratifié multicouche selon la revendication 1 ou 2, **caractérisé en ce que** le support est une feuille de polyoléfine ou de polyester.

4. Stratifié multicouche selon l'une quelconque des revendications 1 à 3, **caractérisé en ce que** le support est un composite de différents matériaux, p. ex. de papier et de polyéthylène.

5. Stratifié multicouche selon l'une quelconque des revendications 1 à 4, **caractérisé en ce que** la couche adhésive sensible à la pression et le polymère adhésif ne contiennent pas d'acétate de vinyle (sous forme libre ou polymérisée).

6. Stratifié multicouche selon l'une quelconque des revendications 1 à 5, **caractérisé en ce que** le polymère adhésif est constitué d'au moins 60 % en poids de (méth)acrylates d'alkyle en C1 à C20.

7. Stratifié multicouche selon l'une quelconque des revendications 1 à 6, **caractérisé en ce que** le polymère adhésif a une teneur en gel inférieure à 40 % en poids.

8. Stratifié multicouche selon l'une quelconque des revendications 1 à 7, **caractérisé en ce que** la couche scellable est constituée d'un polymère solide à température ambiante.

9. Stratifié multicouche selon l'une quelconque des revendications 1 à 8, **caractérisé en ce que** la couche de scellement peut être obtenue par stratification avec une feuille polymère ou mise sous la forme d'un film d'une solution polymère ou dispersion polymère dans de l'eau.

10. Utilisation du stratifié multicouche selon l'une quelconque des revendications 1 à 9 en tant que constituant scellable, p. ex. contenant ou feuille de revêtement, d'un emballage refermable.

11. Procédé d'emballage d'articles dans des emballages refermables, **caractérisé en ce qu'**un stratifié multicouche selon l'une quelconque des revendications 1 à 9 fait partie de l'emballage refermable.

12. Emballages refermables pouvant être obtenus en utilisant un stratifié selon l'une quelconque des revendications 1 à 9.
